(19) Europäisches Patentamt
European Patent Office
Office européen des brevets

(11) EP 3 916 579 A1

(12) EUROPEAN PATENT APPLICATION

(43) Date of publication:
01.12.2021 Bulletin 2021/48

(51) Int Cl.:
G06F 16/33 (2019.01)    G06F 16/38 (2019.01)

(21) Application number: 21160886.4

(22) Date of filing: 05.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.05.2020 CN 202010478321

(71) Applicant: Beijing Baidu Netcom
Science and Technology Co., Ltd.
Beijing 100085 (CN)

(72) Inventors:
• SUN, Yu
  Beijing, Beijing 100085 (CN)
• PANG, Chao
  Beijing, Beijing 100085 (CN)
• WANG, Shuohuan
  Beijing, Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) METHOD FOR RESOURCE SORTING, METHOD FOR TRAINING SORTING MODEL AND CORRESPONDING APPARATUSES

(57) A method for resource sorting, a method for training a sorting model and corresponding apparatuses which relate to the technical field of natural language processing under artificial intelligence are disclosed. The method according to some embodiments includes: forming an input sequence in order with an item to be matched and information of candidate resources; performing Embedding processing on each Token in the input sequence, the Embedding processing including: word Embedding, position Embedding and statement Embedding; and inputting result of the Embedding processing in a sorting model to obtain sorting scores of the sorting model for the candidate resources, the sorting model is obtained by pre-training of a Transformer model.

FIG. 2

## Description

## TECHNICAL FIELD

The present disclosure relates to the technical field of computer application, and particularly to the technical field of natural language processing under artificial intelligence.

## BACKGROUND

With the rapid development of computer networks, increasingly more users acquire various resources through the computer networks. In the face of massive resources, a problem of sorting may be involved, that is, resources are sent to users according to sorting results of the resources. For example, in a search engine, for a query (search item) inputted by a user, webpage resources need to be matched with the query, the webpage resources need to be sorted according to matching results, and then the search results including the webpage resources need to be returned to the user according to sorting results.

## SUMMARY

The present disclosure provides a method for resource sorting, a method for training a sorting model and corresponding apparatuses.

In a first aspect, the present disclosure provides a method for resource sorting, which includes:

forming an input sequence in order with an item to be matched and information of candidate resources; performing Embedding processing on each Token in the input sequence, the Embedding processing including: word Embedding, position Embedding and statement Embedding; and inputting result of the Embedding processing into a sorting model to obtain sorting scores of the sorting model for the candidate resources, the sorting model is obtained by pre-training of a Transformer model.

In a second aspect, the present disclosure provides a method for training a sorting model, which includes:

acquiring training data, the training data including an item to be matched, at least two sample resources corresponding to the item to be matched and sorting information of the sample resources; and training a Transformer model with the training data to obtain the sorting model, specifically including:

forming an input sequence in order with the item to be matched and information of the at least two sample resources; Performing Embedding processing on each Token in the input sequence, the Embedding processing including: word Embedding, position Embedding and statement Embedding; taking result of the Embedding processing as input of the Transformer model, and outputting, by the Transformer model, sorting scores for the sample resources; and optimizing parameters of the Transformer model by using the sorting scores, a training objective including: the sorting scores for the sample resources outputted by the Transformer model being consistent with the sorting information in the training data.

In a third aspect, the present disclosure provides an apparatus for resource sorting, which includes:

an input module configured to form an input sequences in order with an item to be matched and information of candidate resources; an Embedding module configured to perform Embedding processing on each Token in the input sequence, the Embedding processing including: word Embedding, position Embedding and statement Embedding; and a sorting module configured to input result of the Embedding processing in a sorting model to obtain sorting scores of the sorting model for the candidate resources, the sorting model is obtained by pre-training of a Transformer model.

In a fourth aspect, the present disclosure further provides an apparatus for training a sorting model, which includes:

a data acquisition module configured to acquire training data, the training data including an item to be matched, at least two sample resources corresponding to the item to be matched and sorting information of the sample resources; and a model training module configured to train a Transformer model with the training data to obtain the sorting model, the model training module specifically includes:

an input sub-module configured to form an input sequence in order with the item to be matched and information of the at least two sample resources; an Embedding sub-module configured to perform Embedding processing on each Token in the input sequence, the Embedding processing including: word Embedding, position Embedding and statement Embedding; a sorting sub-module configured to take result of the Embedding processing as input of the Transformer model, and output, by the Transformer model, sorting scores for the sample resources; and

an optimization sub-module configured to optimize parameters of the Transformer model by using the sorting scores, a training objective including: the sorting scores for the sample resources outputted by the Transformer model being consistent with the sorting information in the training data.

In a fifth aspect, the present disclosure further provides an electronic device, including:

at least one processor; and
a memory in a communication connection with the at least one processor,
the memory stores instructions executable by the at least one processor, and the instructions are executed by the at least one processor to enable the at least one processor to perform any of the methods described above.

In a sixth aspect, the present disclosure further provides a non-transitory computer-readable storage medium including instructions, which, when executed by a computer, cause the computer to carry out any of the methods described above.

In a seventh aspect, the present disclosure further provides a computer program product including instructions which, when the program is executed by a computer, cause the computer to carry out the method described above.

It may be seen from the above technical solutions that the sorting method provided in the present disclosure comprehensively considers sorting scores of candidate resource information and may achieve a global optimal result. Moreover, in a case where a plurality of candidate resources are included, the sorting model may obtain scores of all the candidate resources only with one calculation, which reduces calculation complexity while improving a sorting effect.

Other effects of the above optional manners will be explained below in combination with specific embodiments.

## BRIEF DESCRIPTION OF THE DRAWINGS

The accompanying drawings are intended to better understand the solutions and do not limit the present disclosure. In the drawings,

Fig. 1 illustrates an exemplary system architecture to which embodiments of the present disclosure may be applied.
Fig. 2 is a flow chart of a resource sorting method according to Embodiment 1 of the present disclosure.
Fig. 3 is a schematic diagram of the principle of a sorting model according to Embodiment 1 of the present disclosure.
Fig. 4 is a flow chart of a method for training a sorting model according to Embodiment 2 of the present disclosure.
Fig. 5 is a structural diagram of a resource sorting apparatus according to an embodiment of the present disclosure.
Fig. 6 is a structural diagram of an apparatus for training a sorting model according to Embodiment 4 of the present disclosure.
Fig. 7 is a block diagram of an electronic device for implementing embodiments of the present disclosure.

## DETAILED DESCRIPTION OF EMBODIMENTS

Exemplary embodiments of the present disclosure are described below with reference to the accompanying drawings, including various details of the embodiments of the present disclosure to facilitate understanding, and they should be considered as exemplary only. Therefore, those of ordinary skill in the art should be aware that the embodiments described here may be changed and modified in various ways without deviating from the scope and spirit of the present disclosure. Similarly, for the sake of clarity and simplicity, descriptions of well-known functions and structures are omitted in the following description.

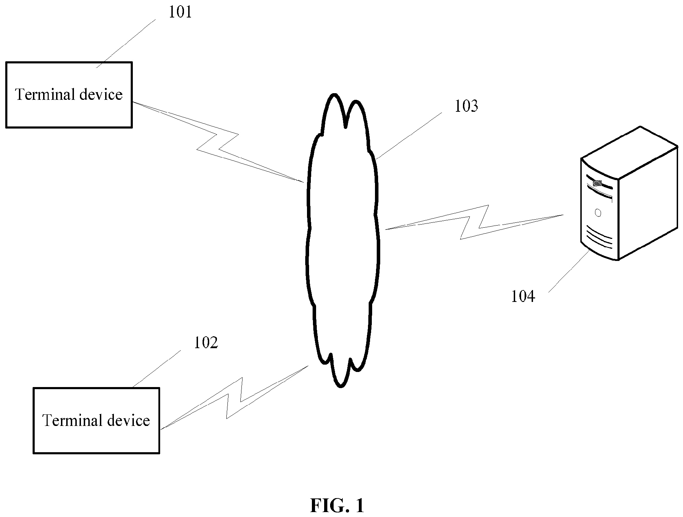

Fig. 1 illustrates an exemplary system architecture to which embodiments of the present disclosure may be applied. With reference to Fig. 1, the system architecture may include terminal devices 101 and 102, a network 103 and a server 104. The network 103 is a medium used to provide communication links between the terminal devices 101, 102, and the server 104. The network 103 may include various types of connections, such as wired, wireless communication links, or fiber optic cables.

A user may use the terminal devices 101 and 102 to interact with the server 104 through the network 103. Various applications such as map applications, voice interaction applications, webpage browser applications, and communication applications may be installed on the terminal devices 101 and 102.

The terminal devices 101 and 102 may be a variety of electronic devices that may support and display resources involved in the present disclosure, including, but not limited to, smart phones, tablets, smart speakers, smart wearable devices, and so on. The apparatus provided in the present disclosure may be provided and run in the server 104. The apparatus may be implemented as a plurality of software or software modules (for example, to provide distributed services), or as a single software or software module, which is not specifically limited herein.

For example, a resource sorting apparatus is provided and run in the server 104. The server 104 may receive a search request from the terminal device 101 or 102. The search request includes a query (search item).

The resource sorting apparatus sorts resources by using the manner provided in the embodiments of the present disclosure, and determines a search result returned to the user according to a sorting result. The search result may be returned to the terminal device 101 or 102.

For another example, the resource sorting apparatus is provided and run in the server 104, and the server 104 acquires a user label from the terminal device 101 or 102, including personalized information such as user preference, gender, geographic position, and age. The sorting apparatus sorts the resources by using the manner provided in the embodiments of the present disclosure, and determines resources recommended to the user according to a sorting result. Information of the recommended resources may be returned to the terminal device 101 or 102.

A resource database is maintained at the server 104, which may be stored locally at the server 104 or stored in other servers and called by the server 104.

For another example, an apparatus for training a sorting model is provided and run in the server 104, and the server 104 trains the sorting model.

The server 104 may be either a single server or a server cluster consisting of a plurality of servers. It should be understood that the number of terminal devices, networks, and servers in Fig. 1 is only schematic. Any number of terminal devices, networks, and servers is possible according to implementation requirements.

In the existing technology, when resources are sorted, the sorting model needs to calculate a matching condition (such as similarity) between each pair of a candidate resource and an item to be matched, and obtain scores of candidate resources according to the matching conditions. For example, in a search engine, after a user inputs a query, a similarity between each candidate webpage and the query needs to be calculated for the candidate webpage, and a score of the candidate page is obtained according to the similarity. Such a sorting method has the following defects:

> 1) When a score of one candidate resource is calculated, other candidate resources are not taken into account, and a result finally obtained is not globally optimal.
> 2) In addition, this method has high calculation complexity. When there are N candidate resources, the sorting model needs to calculate the sorting score for N times. N is a positive integer greater than 1.

Correspondingly, in the existing technology, the sorting model is trained pairwise (pairwise comparison), that is, pairs of a positive sample resource and a negative sample resource corresponding to an item to be matched are created, and similarities between the item to be matched and the positive sample resource and similarities between the item to be matched and the negative sample resource are calculated respectively, to obtain score of the positive sample resource and score of the negative sample resource. A training objective is to maximize a score difference between the positive sample resource and the negative sample resource. However, when this pairwise training method is under a condition of limited training data, the model is difficult to achieve a good effect.

In view of this, the resource sorting method and the method for training a sorting model provided in the present disclosure are both implemented based on a Transformer model, and may effectively solve the defects in the existing technology. The Transformer model is a classic model of natural language processing proposed by Google team in June 2017. The methods provided in the present disclosure are described below in detail with reference to embodiments.

Embodiment 1

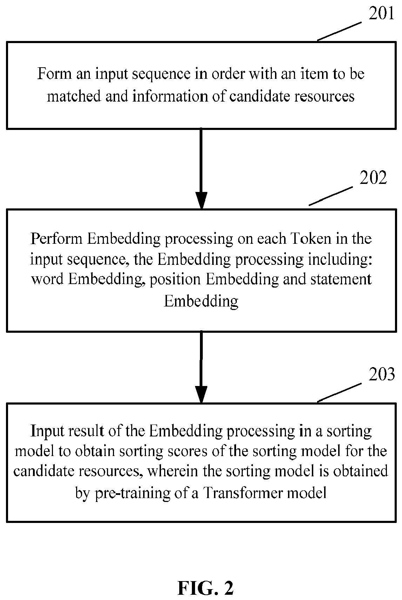

Fig. 2 is a flow chart of a resource sorting method according to Embodiment 1 of the present disclosure. With reference to Fig. 2, the method may include the following steps:

In 201, an input sequence is formed in order with an item to be matched and information of candidate resources.

The present disclosure may be applied to resource search scenarios or resource recommendation scenarios. When the present disclosure is applied to resource search scenarios, the item to be matched may be a query (search item), the candidate resources may be the following types of resources: webpage resources, news resources, multimedia resources and so on. For example, when a user inputs the query in the search engine, the search engine sorts candidate webpages in the manner described in this embodiment, and returns a search result to the user according to a sorting result. Subsequent embodiments will be described by taking this as an example. In this case, the information of the candidate resources may include titles, summaries, bodies, anchor texts, other click queries and so on of the webpages.

For another example, the user inputs a query in a search engine of a video application, and the search engine sorts candidate videos in the manner described in this embodiment, and returns a search result to the user according to a sorting result. In this case, the information of the candidate resources may include titles, summaries, comments, labels and so on of the videos.

When the present disclosure is applied to resource recommendation scenarios, for example, when the user opens a news application, a server of the news application acquires a user label. The user label may include personalized information such as user preference, gender, position and age. Then the news application takes the user label as the item to be matched, sorts candidate news in the manner provided in this embodiment, and recommends the candidate news to the user according to a sorting result. In this case, the information of the candidate resources may include titles, summaries, bodies and so on of the news.

In order to distinguish the candidate resources from the item to be matched, separators may be inserted between the item to be matched and the information of the candidate resources in the input sequence. In this case, each Token in the input sequence includes a character and a separator.

For example, if the user inputs a query in a webpage search and then acquires titles of candidate resources, which are assumed to be title1, title2, title3, title 4, ... respectively, after separators [sep] are inserted, the input sequence is expressed as:

query[sep1]title1[sep2]title2[sep3]title3[sep4]title4[sep5]...

In 202, Embedding processing is performed on each Token in the input sequence, the Embedding processing including: word Embedding, position Embedding and statement Embedding.

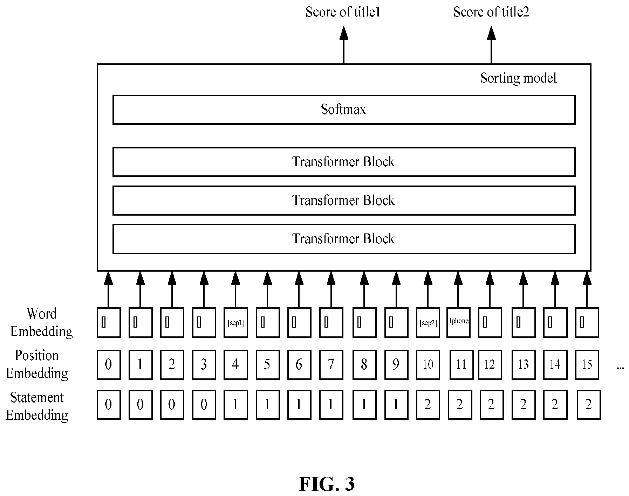

In the present disclosure, Embedding processing needs to be performed on each Token in the input sequence. With reference to Fig. 3, the Embedding processing includes:

Word Embedding, that is, each character/word (Chinese character or English word) or separator is encoded by a word vector to obtain a representation of the word vector. With reference to Fig. 3, assuming that a query "苹果手机" (which means "Apple Mobil phone") and title 1 "好吃的苹果" (which means "delicious apples"), title2 "iPhone 手机介绍" (which means "iPhone introduction") and so on of candidate webpages are formed into an input sequence. Word Embedding is performed on each Token "苹", "果", "手", "机", "[sep1]", "好", "吃" ... respectively.

Position Embedding, that is, the position of each character or separator in the input sequence is encoded to obtain a representation of the position. With reference to Fig. 3, the characters and the separators are sequentially numbered as 0, 1, 2, 3, 4, and so on.

Statement Embedding, that is, a statement to which each character or separator belongs is encoded to obtain an encoding representation of the statement. With reference to Fig. 3, each Token in "苹果手机" is encoded as "0", each Token in "[sep1]好吃的苹果" is encoded as "1", each Token in "[sep2]手机介绍" is encoded as "2", and so on.

In 203, result of the Embedding processing is inputted in a sorting model to obtain sorting scores of the sorting model for the candidate resources, and the sorting model is obtained by pre-training of a Transformer model.

In the input sequence, the item to be matched and the information of the candidate resources are encoded as a whole and then inputted into the sorting model. The sorting model provided in some embodiments of the present disclosure adopts a Transformer model. The Transformer model includes one or more encoding layers and a mapping layer. With reference to Fig. 3, each encoding layer is represented by a Transformer Block and the mapping layer may adopt a Softmax manner.

The encoding layer is configured to perform Attention mechanism processing on vector representations of the inputted Tokens. Specifically, each Transformer Block processes the vector representation of each Token by self-attention and obtains a new vector representation.

The mapping layer is configured to map a vector representation outputted by the last encoding layer to obtain the sorting scores of the candidate resources.

With reference to Fig. 3, the topmost Transformer Block outputs the vector representation of each Token, namely, semantic representation, to the Softmax layer, and the score of each webpage title is mapped by the Softmax layer. The processing mechanism for the Transformer block is not described in detail in the present disclosure and an existing self-attention processing mechanism of the Transformer mode is used.

It may be seen from the sorting method provided in the above embodiment that when information of one candidate resource is scored for sorting, scoring for sorting of information of other candidate resources are comprehensively taken into account, which may achieve a global optimal result. Moreover, in a case where N candidate resources are included, the sorting model may obtain scores of all the candidate resources only with one calculation, which reduces calculation complexity while improving a sorting effect.

In order to achieve the sorting of the sorting model, the sorting model needs to be trained first. A detailed description is given below with reference to the process of training a sorting model in Embodiment 2.

Embodiment 2

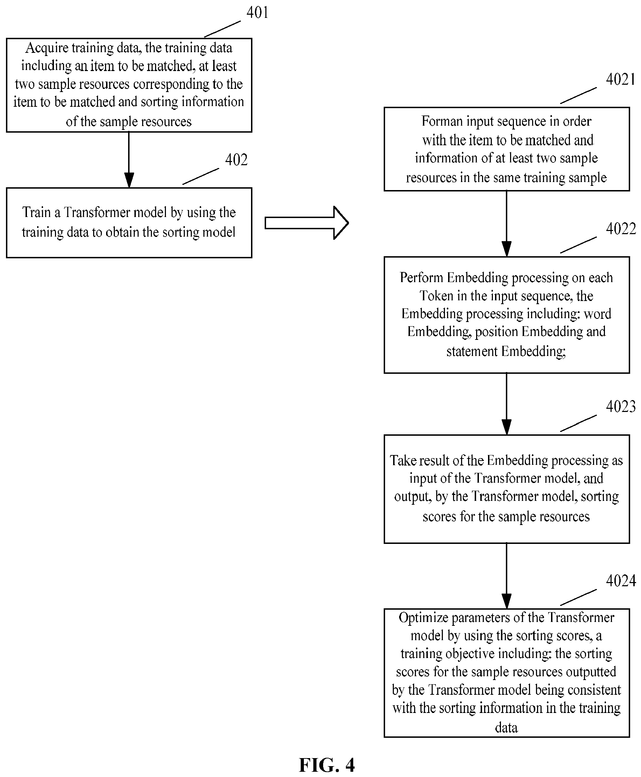

Fig. 4 is a flow chart of a method for training a sorting model according to Embodiment 2 of the present disclosure. With reference to Fig. 4, the method may include the following steps:

In 401, training data is acquired, the training data including an item to be matched, at least two sample resources corresponding to the item to be matched and sorting information of the sample resources.

In this embodiment, the training data may be acquired by manual annotation. For example, a series of sample resources are constructed for the item to be matched, and the sorting information of the sample resources are manually annotated.

Since the manual annotation is costly, a preferred method may be adopted in the embodiment of the present disclosure, that is, the training data is automatically generated by using historical click behaviors of the user in the search engine. For example, historical search logs are acquired from the search engine and search results corresponding to the same query (as the item to be matched) are acquired. Resource information clicked by the user and resource information not clicked by the user are selected therefrom to form sample resources. The sorting of the resource information clicked by the user is higher than that of the resource information not clicked. Furthermore, the sorting of the resource information clicked may also be determined according to the browsing time of the user for the resource information clicked. For example, the longer the browsing time, the higher the sorting.

As a piece of sample data, for example, a query and webpage Title1, Title2, Title3 and Title4 corresponding to the query, the sorting is Title1>Title2>Title3>Title4.

Another piece of sample data, that is, an item to be matched, and at least one positive sample resource and at least one negative sample resource corresponding to the item to be matched may also be adopted, for example, a query, positive sample webpages Title2 and Title4 corresponding to the query, and negative sample webpages Title1 and Title3 corresponding to the query.

In 402, a Transformer model is trained by using the training data to obtain the sorting model, which may specifically include the following steps:
In 4021, an input sequence is formed in order with the item to be matched and information of at least two sample resources in the same training sample.

Similarly, in order to distinguish the information of the sample resources from the item to be matched, separators may be inserted between the item to be matched and the information of the sample resources in the input sequence. In this case, the Token includes a character and a separator.

For example, the same training sample includes a query and webpages title1, title2, title3, title4 ... corresponding to the query. After separators [sep] are inserted, the input sequence is expressed as:
query[sep1]title1[sep2]title2[sep3]title3[sep4]title4[sep5]...

In 4022, Embedding processing is performed on each Token in the input sequence, the Embedding processing including: word Embedding, position Embedding and statement Embedding.

The part is similar to step 202 in Embodiment 1 and is not described in detail here.

In 4023, result of the Embedding processing is taken as input of the Transformer model, and the Transformer model outputs sorting scores for the sample resources.

The structure of the Transformer model may be obtained with reference to Fig. 3, and processing on each layer may be obtained with reference to the description in the above embodiment, which will not described in detail here.

In 4024, parameters of the Transformer model are optimized by using the sorting scores, a training objective including: the sorting scores for the sample resources outputted by the Transformer model being consistent with the sorting information in the training data.

If the training sample is: a query and webpages Title1, Title2, Title3 and Title4 corresponding to the query, which are sorted as Title1>Title2>Title3>Title4, when the parameters of the Transformer model are optimized, sorting scores of the Transformer model for Title1, Title2, Title3 and Title4 are also in order from high to low.

If the training sample is: a query, positive sample webpages Title2 and Title4 corresponding to the query, and negative sample webpages Title1 and Title3 corresponding to the query, the training objective is: sorting scores for the positive sample resource outputted by the Transformer model being better than those for the negative sample resource. For example, a loss function is constructed as:

$$L = \sum_{q \in D} \sum_{Title+} \sum_{Title-} \min(Score_{Title-} - Score_{Title+}, \alpha)$$

where $q$ denotes a query in the training sample, $D$ is a set formed by queries in the training sample, $Title +$ denotes a title of a positive sample webpage, $Title -$ denotes a title of a negative sample webpage, $Score_{Title+}$ denotes a score of the positive sample webpage, and $\alpha$ is a constant between 0 and 1.

It is to be noted that, as a preferred implementation mode, in the above training process, the parameters used in the Embedding processing may also be optimized while the parameters of the Transformer model are optimized. That is, parameters used in the word Embedding, position Embedding and statement Embedding processing are optimized, so that the Embedding processing is also gradually optimized.

In addition, in the above training process, model parameters of the Transformer model may be initialized first at the beginning of training and then gradually optimized. Model parameters of the Transformer model obtained by pre-training in other manners may also be adopted, and then the model parameters are further optimized, directly based on the model parameters of the Transformer model obtained by pre-training, in the manner provided in the above embodiments. The present disclosure does not limit the manner of pre-training the Transformer model.

In the above training manner, overall optimization of information of all candidate resources may be achieved, that is, the optimization is performed Listwise (list comparison), and when information of one candidate resource is sorted and scored, sorting scores of information of other candidate resources are comprehensively taken into account, which may achieve a global optimal result. Moreover, the present disclosure based on a Transformer model, which makes it possible to achieve an ideal effect even when annotation data is limited.

The above is detailed description of the methods provided in the present disclosure. The apparatuses provided in the present disclosure are described in detail below with reference to embodiments.

Embodiment 3

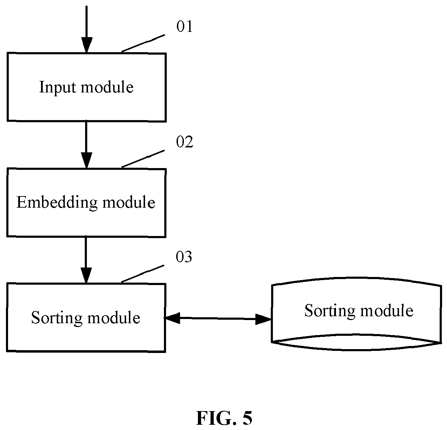

Fig. 5 is a structural diagram of a resource sorting apparatus according to an embodiment of the present disclosure. With reference to Fig. 5, the apparatus may include: an input module 01, an Embedding module 02 and a sorting module 03. Main functions of various component units are as follows:

The input module 01 is configured to form an input sequence in order with an item to be matched and information of candidate resources.

The Embedding module 02 is configured to perform Embedding processing on each Token in the input sequence, the Embedding processing including: word Embedding, position Embedding and statement Embedding.

The sorting module 03 is configured to input result of Embedding processing in a sorting model to obtain sorting scores of the sorting model for the candidate resources, the sorting model is obtained by pre-training of a Transformer model.

Furthermore, the input module 01 may insert separators between the item to be matched and the information of the candidate resources in the input sequence. In this case, the Token includes a character and a separator.

The Transformer model includes one or more encoding layers and a mapping layer. Details may be obtained with reference to Fig. 3.

The encoding layer is configured to perform Attention mechanism processing on vector representations of the inputted Tokens.

The mapping layer is configured to map a vector representation outputted by the last encoding layer to obtain the sorting scores of the candidate resources.

With reference to Fig. 3, the topmost Transformer Block outputs the vector representation of each Token, namely, semantic representation, to the Softmax layer, and the score of each webpage title is obtained by mapping from the Softmax layer. The processing mechanism for the Transformer block is not described in detail in the present disclosure and an existing self-attention processing mechanism of the Transformer mode is used.

The present application may be applied to resource search scenarios or resource recommendation scenarios. When the present disclosure is applied to resource search scenarios, the item to be matched may be a query (search item), the candidate resources may be the following types of resources: webpage resources, news resources, multimedia resources and so on. For example, when a user inputs the query in the search engine, the search engine sorts candidate webpages in the manner described in this embodiment, and returns a search result to the user according to a sorting result.

Subsequent embodiments will be described by taking this as an example. In this case, the information of the candidate resources may include titles, summaries, bodies, anchor texts, other click queries and so on of the webpages.

For another example, the user inputs a query in a search engine of a video application, and the search engine sorts candidate videos in the manner described in this embodiment, and returns a search result to the user according to a sorting result. In this case, the information of the candidate resources may include titles, summaries, comments, labels and so on of the videos.

Embodiment 4

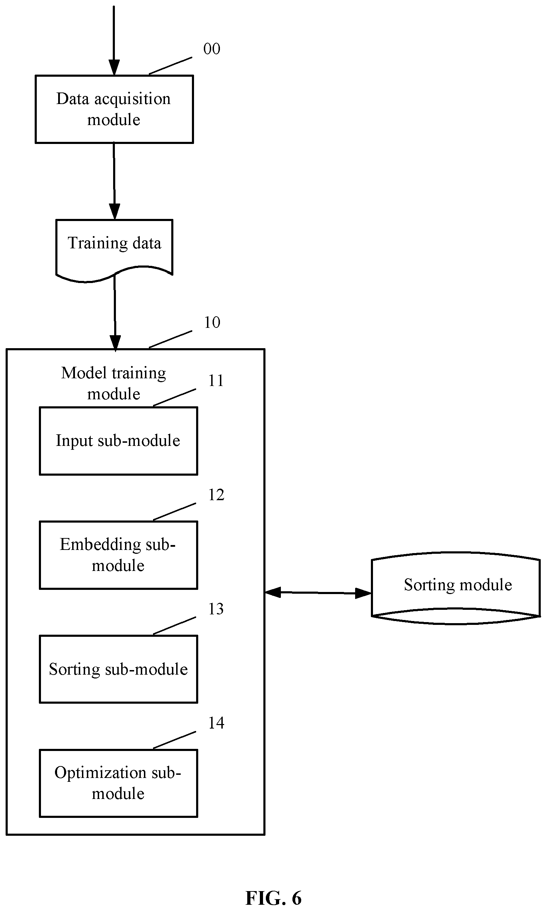

Fig. 6 is a structural diagram of an apparatus for training a sorting model according to Embodiment 4 of the present disclosure. With reference to Fig. 6, the apparatus may include: a data acquisition module 00 and a model training module 10.

The data acquisition module 00 is configured to acquire training data, the training data including an item to be matched, at least two sample resources corresponding to the item to be matched and sorting information of the sample resources.

In this embodiment, the training data may be acquired by manual annotation. For example, a series of sample resources are constructed for the item to be matched, and the sorting information of the sample resources are manually annotated.

Since the manual annotation is costly, a preferred method may be adopted in the embodiment of the present disclosure, that is, the training data is automatically generated by using historical click behaviors of the user in the search engine. For example, historical search logs are acquired from the search engine and search results corresponding to the same query (as the item to be matched) are acquired. Resource information clicked by the user and resource information not clicked by the user are selected therefrom to form sample resources. The sorting of the resource information clicked by the user is higher than that of the resource information not clicked. Furthermore, the sorting of the resource information clicked may also be determined according to the browsing time of the user for the resource information clicked. For example, the longer the browsing time, the higher the sorting.

As a piece of sample data, for example, a query and webpage Title1, Title2, Title3 and Title4 corresponding to the query, the sorting is Title1>Title2>Title3>Title4.

Another piece of sample data, that is, an item to be matched, and at least one positive sample resource and at least one negative sample resource corresponding to the item to be matched may also be adopted, for example, a query, positive sample webpages Title2 and Title4 corresponding to the query, and negative sample webpages Title1 and Title3 corresponding to the query.

The model training module 10 trains a Transformer model by using the training data to obtain the sorting model.

The model training module 10 may include the following sub-modules:

An input sub-module 11 configured to form an input sequence in order with the item to be matched and information of the at least two sample resources.

Furthermore, the input sub-module 11 may insert separators between the item to be matched and the information of the sample resources in the input sequence. In this case, the Token includes a character and a separator.

An Embedding sub-module 12 is configured to perform Embedding processing on each Token in the input sequence, the Embedding processing including: word Embedding, position Embedding and statement Embedding.

A sorting sub-module 13 is configured to take result of the Embedding processing as input of the Transformer model, so that sorting scores for the sample resources will be output by the Transformer model.

The Transformer model includes one or more encoding layers and a mapping layer.

The encoding layer(s) is configured to perform attention mechanism processing on vector representations of the inputted Tokens.

The mapping layer is configured to map a vector representation outputted by the last encoding layer to obtain the sorting scores of the sample resources.

An optimization sub-module 14 is configured to optimize parameters of the Transformer model by using the sorting scores, a training objective including: the sorting scores for the sample resources outputted by the Transformer model being consistent with the sorting information in the training data.

If the training sample is: a query and webpages Title1, Title2, Title3 and Title4 corresponding to the query, which are sorted as Title1>Title2>Title3>Title4, when the parameters of the Transformer model are optimized, sorting scores of the Transformer model for Title1, Title2, Title3 and Title4 are also in order from high to low.

If the training sample is: a query, positive sample webpages Title2 and Title4 corresponding to the query, and negative sample webpages Title1 and Title3 corresponding to the query, the training objective is: sorting scores for the positive sample resource outputted by the Transformer model being better than those for the negative sample resource.

As a preferred implementation mode, the optimization sub-module 14 optimizes the parameters used in the Embedding processing performed by the Embedding sub-module 12 while optimizing the parameters of the Transformer model by using the sorting scores.

According to some embodiments of the present disclosure, the present disclosure further provides an electronic device, a readable storage medium and a computer program product.

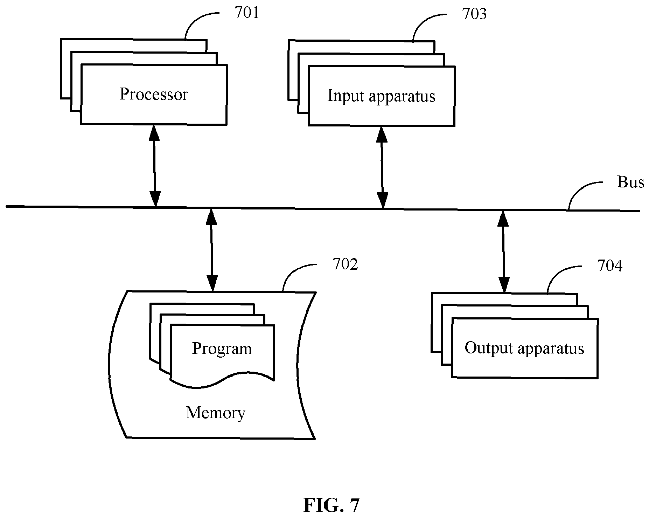

With reference to Fig. 7, it is a block diagram of an electronic device for implementing the sorting method or the method for training a sorting model according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

With reference to Fig. 7, the electronic device includes: one or more processors 701, a memory 702, and interfaces for connecting various components, including high-speed and low-speed interfaces. The components are connected to each other by using different buses and may be mounted on a common motherboard or otherwise as required. The processor may process instructions executed in the electronic device, including instructions stored in the memory or on the memory to display graphical information of a GUI on an external input/output apparatus (such as a display device coupled to the interfaces). In other implementation modes, a plurality of processors and/or buses may be used together with a plurality of memories, if necessary. Similarly, a plurality of electronic devices may be connected, each of which provides some necessary operations (for example, as a server array, a set of blade servers, or a multiprocessor system). One processor 701 is taken as an example is Fig. 7.

The memory 702 is the non-instantaneous computer-readable storage medium provided in the present disclosure. The memory stores instructions executable by at least one processor to make the at least one processor perform the sorting method or the method for training a sorting model provided in the present disclosure. The non-instantaneous computer-readable storage medium in the present disclosure stores computer instructions. The computer instructions are used to make a computer perform the sorting method or the method for training a sorting model provided in the present disclosure.

The memory 702, as a non-instantaneous computer-readable storage medium, may be configured to store non-instantaneous software programs, non-instantaneous computer executable programs and modules, for example, program instructions/modules corresponding to the sorting method or the method for training a sorting model provided in the present disclosure. The processor 701 runs the non-instantaneous software programs, instructions and modules stored in the memory 702 to execute various functional applications and data processing of a server, that is, to implement the sorting method or the method for training a sorting model in the above method embodiments.

The memory 702 may include a program storage area and a data storage area. The program storage area may store an operating system and an application required by at least one function; and the data storage area may store data created according to use of the electronic device. In addition, the memory 702 may include a high-speed random access memory, and may further include a non-instantaneous memory, for example, at least one disk storage device, a flash memory device, or other non-instantaneous solid-state storage devices. In some embodiments, the memory 702 optionally includes memories remotely disposed relative to the processor 701. The remote memories may be connected to the electronic device over a network. Examples of the network include, but are not limited to, the Internet, intranets, local area networks, mobile communication networks and combinations thereof.

The electronic device may further include: an input apparatus 703 and an output apparatus 704. The processor 701, the memory 702, the input apparatus 703 and the output apparatus 704 may be connected through a bus or in other manners. In Fig. 7, the connection through a bus is taken as an example.

The input apparatus 703 may receive input numerical information or character information, and generate key signal input related to user setting and function control of the electronic device, for example, input apparatuses such as a touch screen, a keypad, a mouse, a trackpad, a touch pad, a pointer, one or more mouse buttons, a trackball, and a joystick. The output apparatus 704 may include a display device, an auxiliary lighting device (e.g., an LED) and a tactile feedback device (e.g., a vibration motor). The display device may include, but is not limited to, a liquid crystal display (LCD), a light-emitting diode (LED) display and a plasma display. In some implementation modes, the display device may be a touch screen.

Various implementation modes of the systems and technologies described here may be implemented in a digital electronic circuit system, an integrated circuit system, an ASIC (application-specific integrated circuit), computer hardware, firmware, software, and/or combinations thereof. The various implementation modes may include: being implemented in one or more computer programs, and the one or more computer programs may be executed and/or interpreted on a programmable system including at least one programmable processor, and the programmable processor may be a special-purpose or general-purpose programmable processor, receive data and instructions from a storage system, at least one input apparatus and at least one output apparatus, and transmit the data and the instructions to the storage system, the at least one input apparatus and the at least one output apparatus.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here may be implemented on a computer. The computer has: a display device (e.g., a CRT (cathode-ray tube) or an LCD (liquid crystal display) monitor) for displaying information to the user; and a keyboard and pointing device (e.g., a mouse or trackball) through which the user may provide input for the computer. Other kinds of apparatuses may also be configured to provide interaction with the user. For example, a feedback provided for the user may be any form of sensory feedback (for example, visual, auditory, or tactile feedback); and input from the user may be received in any form (including sound input, voice input, or tactile input).

The systems and technologies described here may be implemented in a computing system including background components (for example, as a data server), or a computing system including middleware components (for example, an application server), or a computing system including front-end components (for example, a user computer with a graphical user interface or webpage browser through which the user may interact with the implementation mode of the systems and technologies described here), or a computing system including any combination of such background components, middleware components or front-end components. The components of the system may be connected to each other through any form or medium of digital data communication (for example, a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

It should be understood that the steps may be reordered, added, or deleted by using the various forms of processes shown above. For example, the steps described in the present disclosure may be executed in parallel or sequentially or in different sequences, provided that the desired results of the technical solutions disclosed in the present disclosure may be achieved, which are not limited herein.

The above specific implementation mode does not limit the extent of protection of the present disclosure. Those skilled in the art should understand that various modifications, combinations, sub-combinations, and replacements may be made according to design requirements and other factors. Any modifications, equivalent substitutions and improvements made within the spirit and principle of the present disclosure all should be included in the extent of protection of the present disclosure.

**Claims**

1. A method for resource sorting, comprising:

   forming (201) an input sequence in order with an item to be matched and information of candidate resources;
   performing (202) Embedding processing on each Token in the input sequence, the Embedding processing comprising: word Embedding, position Embedding and statement Embedding; and
   inputting (203) result of the Embedding processing into a sorting model to obtain sorting scores of the sorting model for the candidate resources, wherein the sorting model is obtained by pretraining of a Transformer model.

2. The method according to claim 1, wherein separators are inserted between the item to be matched and the information of the candidate resources in the input sequence; and
   the Token comprises a character and a separator.

3. The method according to claim 1 or 2, wherein the Transformer model comprises one or more encoding layers and a mapping layer;
   the one or more encoding layers are configured to perform attention mechanism processing on vector representations of the inputted Tokens; and
   the mapping layer is configured to map a vector representation outputted by the last encoding layer to obtain the sorting scores for the candidate resources.

4. The method according to any one of claims 1 to 3, wherein the item to be matched comprises a query item or a user label; and
   the resources comprise: webpage resources, news resources or multimedia resources.

5. A method for training a sorting model, comprising:

   acquiring (401) training data, the training data comprising an item to be matched, at least two sample resources corresponding to the item to be matched and sorting information of the sample resources; and
   training (402) a Transformer model with the training data to obtain the sorting model, specifically comprising:

   forming (4021) an input sequence in order with the item to be matched and information of the at least two sample resources;
   performing (4022) Embedding processing on each Token in the input sequence, the Embedding processing comprising: word Embedding, position Embedding and statement Embedding;
   taking (4023) result of the Embedding processing as input of the Transformer model, and outputting, by the Transformer model, sorting scores for the sample resources; and
   optimizing (4024) parameters of the Transformer model by using the sorting scores, a training objective comprising: the sorting scores for the sample resources outputted by the Transformer model being consistent with the sorting information in the training data.

6. The method according to claim 5, wherein separators are inserted between the item to be matched and the information of the sample resources in the input sequence; and
   the Token comprises a character and a separator.

7. The method according to claim 5 or 6, wherein the Transformer model comprises one or more encoding layers and mapping layer;
   the one or more encoding layers are configured to perform attention mechanism processing on vector representations of the inputted Tokens; and
   the mapping layer is configured to map a vector representation outputted by the last encoding layer to obtain the sorting scores for the sample resources.

8. The method according to any of claims 5 to 7, wherein the at least two sample resources comprise: at least one positive sample resource and at least one negative sample resource corresponding to the item to be matched; and
   the training objective comprises: the sorting score for the positive sample resource outputted by the Transformer model being better than the sorting score for the negative sample resource.

9. The method according to any one of claims 5 to 8, wherein parameters used by the Embedding processing are optimized while the parameters of the Transformer model are optimized by using the sorting scores.

**10.** An apparatus for resource sorting, comprising:

> an input module (01) configured to form (201) an input sequence in order with an item to be matched and information of candidate resources;
> an Embedding module (02) configured to perform (202) Embedding processing on each Token in the input sequence, the Embedding processing comprising: word Embedding, position Embedding and statement Embedding; and
> a sorting module (03) configured to input (203) result of the Embedding processing in a sorting model to obtain sorting scores of the sorting model for the candidate resources, wherein the sorting model is obtained by pre-training of a Transformer model.

**11.** The apparatus according to claim 10, wherein the input module (01) is further configured to insert separators between the item to be matched and the information of the candidate resources in the input sequence; and
the Token comprises a character and a separator.

**12.** The apparatus according to claim 10 or 11, wherein the Transformer model comprises one or more encoding layers and mapping layer;
the one or more encoding layers are configured to perform attention mechanism processing on vector representations of the inputted Tokens; and
the mapping layer is configured to map a vector representation outputted by the last encoding layer to obtain the sorting scores for the candidate resources.

**13.** The apparatus according to any one of claims 10 to 12, wherein the item to be matched comprises a query item or a user label; and
the resources comprise: webpage resources, news resources or multimedia resources.

**14.** An apparatus for training a sorting model, comprising:

> a data acquisition module (00) configured to acquire (401) training data, the training data comprising an item to be matched, at least two sample resources corresponding to the item to be matched and sorting information of the sample resources; and
> a model training module (10) configured to train (402) a Transformer model with the training data to obtain the sorting model,
> wherein the model training module (10) specifically comprises:

> an input sub-module (11) configured to form (4021) an input sequence in order with the item to be matched and information of the at least two sample resources;
> an Embedding sub-module (12) configured to perform (4022) Embedding processing on each Token in the input sequence, the Embedding processing comprising: word Embedding, position Embedding and statement Embedding;
> a sorting sub-module (13) configured to take (4023) result of the Embedding processing as input of the Transformer model, and output, by the Transformer model, sorting scores for the sample resources; and
> an optimization sub-module (14) configured to optimize (4024) parameters of the Transformer model by using the sorting scores, a training objective comprising: the sorting scores for the sample resources outputted by the Transformer model being consistent with the sorting information in the training data.

**15.** The apparatus according to claim 14, wherein the input sub-module (11) is further configured to insert separators between the item to be matched and the information of the sample resources in the input sequence; and
the Token comprises a character and a separator.

**16.** The apparatus according to claim 14 or 15, wherein the Transformer model comprises one or more encoding layers and mapping layer;
the one or more encoding layers are configured to perform attention mechanism processing on vector representations of the inputted Tokens; and
the mapping layer is configured to map a vector representation outputted by the last encoding layer to obtain the sorting scores for the sample resources.

**17.** The apparatus according to any of claims 14 to 16, wherein the at least two sample resources comprise: at least one positive sample resource and at least one negative sample resource corresponding to the item to be matched; and
the training objective comprises: the sorting scores for the positive sample resource outputted by the Transformer model being better than the sorting score for the negative sample resource.

**18.** The apparatus according to any one of claims 14 to 17, wherein the optimization sub-module (14) optimizes parameters used by the Embedding sub-module for Embedding processing while optimizing the parameters of the Transformer model by using the sorting scores.

**19.** An electronic device, comprising:

at least one processor (701); and
a memory (702) in a communication connection with the at least one processor(701), wherein the memory (702) stores instructions executable by the at least one processor(701), and the instructions are executed by the at least one processor (701) to enable the at least one processor (701) to perform the method according to any one of claims 1 to 9.

**20.** A non-transitory computer-readable storage medium comprising instructions, which, when executed by a computer, cause the computer to carry out the method according to any of claims 1 to 9.

**21.** A computer program product comprising instructions which, when the program is executed by a computer, cause the computer to carry out the method according to any of claims 1 to 9.

101

Terminal device

103

104

102

Terminal device

**FIG. 1**

201

Form an input sequence in order with an item to be matched and information of candidate resources

202

Perform Embedding processing on each Token in the input sequence, the Embedding processing including: word Embedding, position Embedding and statement Embedding

203

Input result of the Embedding processing in a sorting model to obtain sorting scores of the sorting model for the candidate resources, wherein the sorting model is obtained by pre-training of a Transformer model

**FIG. 2**

Score of title1    Score of title2

| Sorting model |
| Softmax |
| Transformer Block |
| Transformer Block |
| Transformer Block |

Word Embedding: ▯ ▯ ▯ ▯ [sep1] ▯ ▯ ▯ ▯ ▯ [sep2] Iphone ▯ ▯ ▯ ▯

Position Embedding: 0 1 2 3 4 5 6 7 8 9 10 11 12 13 14 15 ...

Statement Embedding: 0 0 0 0 1 1 1 1 1 1 2 2 2 2 2 2

**FIG. 3**

401

Acquire training data, the training data including an item to be matched, at least two sample resources corresponding to the item to be matched and sorting information of the sample resources

402

Train a Transformer model by using the training data to obtain the sorting model

4021

Forman input sequence in order with the item to be matched and information of at least two sample resources in the same training sample

4022

Perform Embedding processing on each Token in the input sequence, the Embedding processing including: word Embedding, position Embedding and statement Embedding;

4023

Take result of the Embedding processing as input of the Transformer model, and output, by the Transformer model, sorting scores for the sample resources

4024

Optimize parameters of the Transformer model by using the sorting scores, a training objective including: the sorting scores for the sample resources outputted by the Transformer model being consistent with the sorting information in the training data

**FIG. 4**

01

Input module

02

Embedding module

03

Sorting module ◄────► Sorting module

**FIG. 5**

**FIG. 6**

701

Processor

703

Input apparatus

Bus

702

Program

Memory

704

Output apparatus

**FIG. 7**

**EP 3 916 579 A1**

Europäisches
Patentamt

European
Patent Office

Office européen
des brevets

# EUROPEAN SEARCH REPORT

Application Number

EP 21 16 0886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/005149 A1 (RAMANATH ROHAN [US] ET AL) 2 January 2020 (2020-01-02)<br>* abstract *<br>* paragraph [0018] - paragraph [0030] *<br>* paragraph [0049] - paragraph [0052] *<br>* paragraph [0077] - paragraph [0084] *<br>----- | 1-21 | INV.<br>G06F16/33<br>G06F16/38 |
| X | US 2019/065507 A1 (WANG SHUOHUAN [CN] ET AL) 28 February 2019 (2019-02-28)<br>* abstract *<br>* paragraph [0005] - paragraph [0013] *<br>* paragraph [0056] - paragraph [0060] *<br>----- | 1-21 | |
| X | US 2019/188295 A1 (SIROTKOVIC JADRAN [IE] ET AL) 20 June 2019 (2019-06-20)<br>* abstract *<br>* paragraph [0002] *<br>* paragraph [0010] - paragraph [0015] *<br>* paragraph [0023] - paragraph [0028] *<br>----- | 1-21 | |

TECHNICAL FIELDS
SEARCHED      (IPC)

G06F

The present search report has been drawn up for all claims

| Place of search | Date of completion of the search | Examiner |
|---|---|---|
| Berlin | 18 August 2021 | Pose Rodríguez, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                  
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 0886

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2021

| Patent document cited in search report | | Publication date | Patent family member(s) | | Publication date |
|---|---|---|---|---|---|
| US 2020005149 | A1 | 02-01-2020 | NONE | | |
| US 2019065507 | A1 | 28-02-2019 | CN | 107491534 A | 19-12-2017 |
| | | | US | 2019065507 A1 | 28-02-2019 |
| US 2019188295 | A1 | 20-06-2019 | NONE | | |

EPO FORM P0459

For more details about this annex : see Official Journal of the European Patent Office, No. 12/82